(19) **Europäisches Patentamt**
**European Patent Office**
**Office européen des brevets**

(11) **EP 3 464 924 B1**

(12) **EUROPÄISCHE PATENTSCHRIFT**

(45) Veröffentlichungstag und Bekanntmachung des Hinweises auf die Patenterteilung:
**05.08.2020  Patentblatt 2020/32**

(51) Int Cl.:
***F16D 48/06*** *(2006.01)*

(21) Anmeldenummer: **17728206.8**

(22) Anmeldetag: **07.06.2017**

(86) Internationale Anmeldenummer:
**PCT/EP2017/063776**

(87) Internationale Veröffentlichungsnummer:
**WO 2017/211862 (14.12.2017 Gazette 2017/50)**

(54) **FAHRZEUG SOWIE VERFAHREN ZUM BETREIBEN EINER KUPPLUNG ALS ANFAHRELEMENT**

VEHICLE AND METHOD FOR OPERATING A CLUTCH AS A STARTER ELEMENT

VÉHICULE ET PROCÉDÉ PERMETTANT DE FAIRE FONCTIONNER UN EMBRAYAGE COMME UN ÉLÉMENT DE DÉMARRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2016  DE 102016209998**

(43) Veröffentlichungstag der Anmeldung:
**10.04.2019  Patentblatt 2019/15**

(73) Patentinhaber: **Audi AG**
**85045 Ingolstadt (DE)**

(72) Erfinder: **JONUSCHEIT, Michael**
**90403 Nürnberg (DE)**

(56) Entgegenhaltungen:
**WO-A1-2016/008463        WO-A2-03/006841**
**DE-A1- 10 201 982        DE-A1- 10 316 454**
**DE-A1-102011 080 716**

**Beschreibung**

Die Erfindung betrifft ein Fahrzeug nach dem Oberbegriff des Patentanspruches 1.

In einem gattungsgemäßen Kraftfahrzeug kann im Antriebsstrang zwischen der Brennkraftmaschine und dem Getriebe als Anfahrelement eine Kupplung, insbesondere eine nasslaufende Lamellenkupplung, zwischengeschaltet sein. Diese kann automatisiert mittels eines Kupplungsaktors betrieben werden, der von einem Kupplungs-Steuergerät elektrohydraulisch ansteuerbar ist, und zwar dahingehend, dass die Kupplung ein vorbestimmtes Drehmoment (das heißt Kupplungsmoment) übertragen kann. Zur Ansteuerung der Kupplung wird im Kupplungs-Steuergerät ein Soll-Kupplungsmoment vorgegeben, das in einer Stelleinheit in eine damit korrelierende Stellgröße (das heißt in einem Hydrauliksystem in einen Hydraulikdruck) umgewandelt wird, mit dem der Kupplungsaktor beaufschlagbar ist, so dass die Kupplung ein vorbestimmtes Drehmoment übertragen kann. Die Stellgröße (das heißt der Hydraulikdruck) wird in der Stelleinheit in Abhängigkeit von dem Soll-Kupplungselement und vom einem, im Kupplungs-Steuergerät hinterlegten Reibwert ermittelt, der die Verstärkung zwischen den auf den Kupplungsaktor wirkenden Hydraulikdruck (das heißt eine auf die Kupplung wirkende Normalkraft) und dem resultierenden Kupplungsmoment beschreibt. Der Reibwert ist in Abhängigkeit von diversen Einflussfaktoren, das heißt einem Kupplungsschlupf, einem aktuellen Öl-Volumenstrom sowie einer aktuellen Kühlöltemperatur, in Kennfeldern tabellarisch hinterlegt. Zudem weist das Fahrzeug ein Motorsteuergerät, das im Fahrbetrieb eine aktuelle Motordrehzahl (Ist-Motordrehzahl) und ein aktuelles, zugehöriges Motormoment (Ist-Motormoment) ermittelt. Mittels des Motor-Steuergeräts wird im Fahrzeugstillstand bei laufender Brennkraftmaschine die Ist-Motordrehzahl auf eine vordefinierte Leerlaufdrehzahl drehzahlgeregelt.

Der Reibwert der Kupplung kann in einem Betriebspunkt (das heißt zum Beispiel im Fahrzeugstillstand bei sowohl im Leerlauf betriebener Brennkraftmaschine als auch bei geringfügig betätigter Kupplung) als ein Proportionalfaktor zwischen dem resultierenden Kupplungsmoment und dem gestellten Druck interpretiert werden. Dieser Reibwert wird werkseitig durch gezielte Analyse für ein Mustersystem identifiziert. Der Nachteil einer solchen Reibwertbestimmung ist, dass die so ermittelten Parameter nur in gewissen Grenzen (Produktionsstreuung) gültig sind und auch die Veränderungen des jeweiligen Reibwerts über Lebenszeit nicht abgebildet werden können.

Eine solche Reibwert-Änderung kann beim Kupplungsbetrieb zu Komforteinbußen führen. Aus diesem Grund ist es bevorzugt, wenn eine Anpassung der Kupplungsmomentenkennlinie bzw. der im Kupplungs-Steuergerät hinterlegten Kupplungs-Reibwerte an das veränderte Momentenübertragungsverhalten der Kupplung erfolgt.

Beispielhaft ist aus der DE 10 2004 029 558 A1 ein Verfahren zum Adaptieren einer in einer elektronischen Steuereinrichtung abgelegten Beziehung zwischen einem von einer Kupplung übertragbaren Moment und einer Steuergröße zum Steuern einer Betätigungseinrichtung der Kupplung bekannt. Aus der DE 2008 027 071 A1 ist ein gattungsgemäßes Verfahren sowie eine Vorrichtung zur Reibwert-Adaption bekannt, bei der ein Reibwert einer zwischen einer Elektromaschine und einer Brennkraftmaschine angeordneten Kupplung adaptierbar ist. Aus der DE 197 51 455 A1 ist ein Verfahren zum Regeln einer automatisierten Kupplung bekannt, mit der eine betriebssichere und zuverlässige Kupplungsregelung gewährleistet ist. Aus der DE 198 46 404 A1 ist ein weiteres Verfahren zur Bestimmung des Reibwertgradienten bekannt. Aus der WO 2016/008463 A1 ist ein Verfahren zur Bestimmung einer Tastpunktänderung und zur Adaption eines Reibwertes einer Hybridtrennkupplung eines Hybridfahrzeugs bekannt. Aus der DE 10 2011 080716 A1 ist ein Verfahren zur Steuerung einer in einem Antriebsstrang eines Kraftfahrzeugs bekannt. Aus der WO 03/006841 A2 ist ein Verfahren zum Adaptieren der Einstellung einer Kupplung in einem unkonventionellen Antriebsstrang eines Fahrzeugs bekannt. Aus der DE 102 01 982 A1 ist ein Verfahren zum Steuern und/oder Regeln einer automatisierten Kupplung eines Fahrzeuges bekannt.

Die Aufgabe der Erfindung besteht darin, ein Fahrzeug mit einer als Anfahrelement wirkenden Kupplung bereitzustellen, bei der in einfacher sowie zuverlässiger Weise der im Kupplungs-Steuergerät hinterlegte Reibwert zur Bestimmung der auf den Kupplungsaktor einwirkenden Stellgröße dem tatsächlichen Momentenübertragungsverhalten der Kupplung anpassbar ist.

Die Aufgabe ist durch die Merkmale des Patentanspruches 1 gelöst. Bevorzugte Weiterbildungen der Erfindung sind in den abhängigen Ansprüchen offenbart.

Gemäß dem kennzeichnenden Teil des Patentanspruches 1 ist dem Kupplungs-Steuergerät eine Adaptionseinrichtung zugeordnet, die bei Vorliegen eines Fahrzeugstillstands mit bei der Leerlaufdrehzahl laufenden Brennkraftmaschine einen Reibwert-Adaptionsvorgang startet. Im Reibwert-Adaptionsvorgang generiert das Kupplungs-Steuergerät ein Prüf-Kupplungsmoment. Der Kupplungsaktor wird somit mit einer, mit dem Prüf-Kupplungsmoment korrelierenden Prüf-Stellgröße beaufschlagt. Dies führt zu einer Erhöhung des Ist-Motormoments auf ein Prüf-Motormoment, und zwar unter Beibehaltung der auf die Leerlaufdrehzahl geregelten Ist-Motordrehzahl. Das Prüf-Motormoment, die auf den Kupplungsaktor einwirkende Prüf-Stellgröße sowie das Leerlauf-Motormoment, das sich im Fahrzeugstillstand bei vollständig geöffneter Kupplung ergibt, werden einer Auswerteeinheit der Adaptionseinrichtung signaltechnisch zugeführt. Die Auswerteeinheit berechnet aus diesen Parametern einen adaptierten Reibwert, der den im Kupplungs-Steuergerät hinterlegten (zum Beispiel empirisch bestimmten) Prüf-Reibwert ersetzt. Die Prüf-Stell-

große wird in der Stelleinheit in Abhängigkeit von dem im Kupplungs-Steuergerät generierten Prüf-Kupplungsmoment und einem mit dem Prüf-Kupplungsmoment korrelierenden Prüf-Reibwert ermittelt.

Erfindungsgemäß werden bestimmte statische und auch dynamische Fahrsituationen, wie Kriechen, Anfahren, etc., analysiert. Dabei werden aus dem Solldruck und dem Motormoment die Reibwerte während des Fahrbetriebs des Kunden berechnet. Diese werden dann in die unterschiedlichen Reibwertabhängigkeiten, wie Temperatur, Schlupf, Moment etc. klassifiziert und anhand von statistischen Methoden verarbeitet.

Bei der erfindungsgemäßen Reibwertbestimmung wird für den Niedriglastbereich (das heißt bei geringem Kupplungsmoment) ein statischer Zustand ausgewertet. Dieser bezieht sich auf das Stehen in einer Fahrstufe, also mit angelegter Kupplung, niedrigem Moment und im Schlupf der Leerlaufdrehzahl. Die Reibwertkennlinie wird nun aus den dynamischen Niederlastanteilen und im hohen Maß auch durch den statisch bestimmten Punkt interpoliert. Bei höheren Kupplungsmomenten wird ebenfalls ein statischer Punkt bestimmt, zum Beispiel vor der Drehzahlanpassung. Die weitere Verarbeitung der Messwerte entspricht im Prinzip der der von niedrigen Lastpunkten.

Mit der Erfindung wird das Reibwertverhalten über den gesamten Lebenszyklus des Fahrzeugs bzw. des Getriebes stets aktualisiert. Die aktualisierten Reibwerte werden für die Vorsteuerung der Kupplung verwendet. Dadurch erfolgt eine sich selbst adaptierende Reibwertvorsteuerung.

Nachfolgend werden weitere Aspekte der Erfindung erläutert:

So beschreibt der Reibwert in an sich bekannter Weise die Verstärkung zwischen einem auf die Kupplung wirkenden Anpressdruck (das heißt die Normalkraft) und dem daraus resultierenden Kupplungsmoment, bis zu dem ein Drehmoment schlupffrei übertragbar ist. Das Kupplungsmoment ist in bekannter Weise direkt proportional zum Produkt aus Reibwert und dem Anpressdruck. Aus diesem Verhältnis wird die auf den Kupplungsaktor wirkende Stellgröße in der oben erwähnten Stelleinheit aus der folgenden Gleichung berechnet:

$$M_{K,soll} = \mu \times K_{geo} \times \Delta p \quad ,$$

wobei

| | |
|---|---|
| $M_{K,soll}$ | Soll-Kupplungsmoment |
| $\mu$ | Reibwert |
| $K_{geo}$ | Konstante. |
| $\Delta p$ | Differenzdruck auf Greifpunkt |

In der bereits erwähnten Auswerteeinheit der Adaptionseinrichtung wird im Adaptionsvorgang der adaptierte Reibwert $\mu_a$ aus der folgenden Gleichung berechnet:

$$\mu_a = \frac{\Delta M}{\Delta p_{prüf} \times K_{geo}} \quad ,$$

wobei

| | |
|---|---|
| $\Delta M$ | Momentendifferenz zwischen Prüf-Motormoment $M_{M,prüf}$ und Leerlauf-Motormoment $M_{Leerlauf}$; |
| $\Delta p_{prüf}$ | Prüf-Stellgröße, korreliert mit Prüf-Kupplungsmoment $M_{K,prüf}$; |
| $K_{geo}$ | Konstante. |

Die Momentendifferenz $\Delta M$ zwischen dem Prüf-Motormoment $M_{M,prüf}$ und dem Leerlauf-Motormoment $M_{Leerlauf}$ entspricht einem Ist-Kupplungsmoment, das von der Kupplung übertragbar ist, Das Ist-Kupplungselement an der Brennkraftmaschine ist im Adaptionsvorgang weitgehend identisch mit dem vom Steuergerät ausgegebenen Prüf-Kupplungsmoment.

Wie bereits oben erwähnt, wird bei der Berechnung der Stellgröße (das heißt der auf den Kupplungsaktor wirkende Differenzdruck auf Greifpunkt) anhand eines Reibwerts berechnet, der im Kupplungs-Steuergerät hinterlegt ist. Der Prüf-Reibwert $\mu_{prüf}$ bildet zusammen mit einer Vielzahl weiterer Reibwerte zumindest ein tabellarisch hinterlegtes Start-Kennfeld, das in einem mehrachsigen Kennfeld-Diagramm aufspannbar ist. In dem Start-Kennfeld sind die Reibwerte in Abhängigkeit von einem Kupplungsschlupf und von einem Kupplungsmoment abgelegt. Speziell bei einer nasslaufenden Lamellenkupplung, die mit Kühlöl durchströmt ist, sind eine Mehrzahl solcher Kennfelder in Abhängigkeit unterschiedlicher Kühlöl-Temperaturen und/oder -Volumenströme hinterlegt.

Im Adaptionsvorgang ersetzt der in der Auswerteinheit berechnete adaptierte Reibwerte $\mu_A$ den dazu korrespondierenden Prüf-Reibwert $\mu_{prüf}$ im Start-Kennfeld. Die restlichen Prüf-Reibwerte im Start-Kennfeld werden dagegen nicht in rechenzeitintensiver Signalverarbeitung ebenfalls berechnet, sondern vielmehr, insbesondere durch Interpolation, dem berechneten adaptierten Reibwert $\mu_a$ angepasst, und zwar unter Bildung eines adaptierten Kennfelds. Erfindungsgemäß wird daher alleine auf der Grundlage des berechneten adaptierten Reibwerts $\mu_a$ das adaptierte Kennfeld ermittelt. Beispielhaft kann das adaptierte Kennfeld unter Parallelverschiebung des Start-Kennfelds entlang einer Reibwert-Achse im Kennfeld-Diagramm bis zum berechneten adaptierten Reibwert $\mu_a$ gebildet sein.

Bei Verwendung einer nasslaufenden Lamellenkupplung wird zusätzlich in jedem Adaptionsvorgang die aktuelle Kühlöltemperatur sowie der aktuelle Kühlöl-Volumenstrom erfasst. Der berechnete adaptierte Reibwert wird somit in Abhängigkeit von der Öltemperatur/Öl-Volumenstrom in einem der im Kupplungs-Steuergerät hinterlegten Kennfelder eingetragen und ersetzt dort den korrespondierenden Prüf-Reibwert $\mu_{prüf}$ bei der entsprechenden Öltemperatur/Öl-Volumenstrom.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:

Fig. 1 in einem stark vereinfachten Blockschaltdiagramm den Antriebsstrang mit zugeordnetem Kupplungs-Steuergerät zur automatischen Ansteuerung einer nasslaufenden Lamellenkupplung als Anfahrelement;

Fig. 2 ein Kennfeld-Diagramm, aus dem in Abhängigkeit vom Kupplungsschlupf und vom Kupplungsmoment ein Reibwert lesbar ist, um die auf den Kupplungsaktor wirkende Stellgröße zu berechnen;

Fig. 3 eine Ansicht entsprechend der Fig. 1 mit einer zusätzlichen Adaptionseinrichtung; und

Fig. 4 eine Ansicht entsprechend der Fig. 3 zur Veranschaulichung des Adaptionsvorgangs.

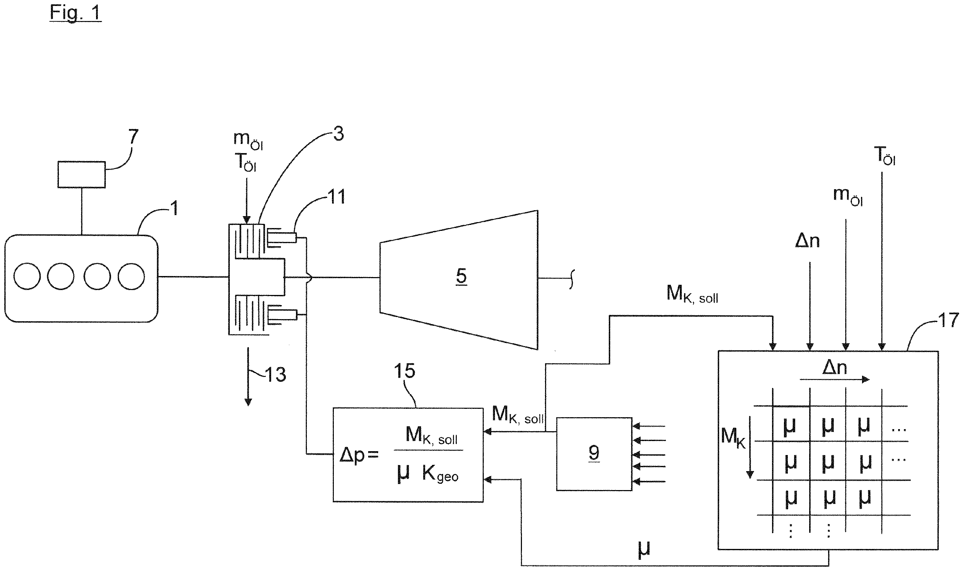

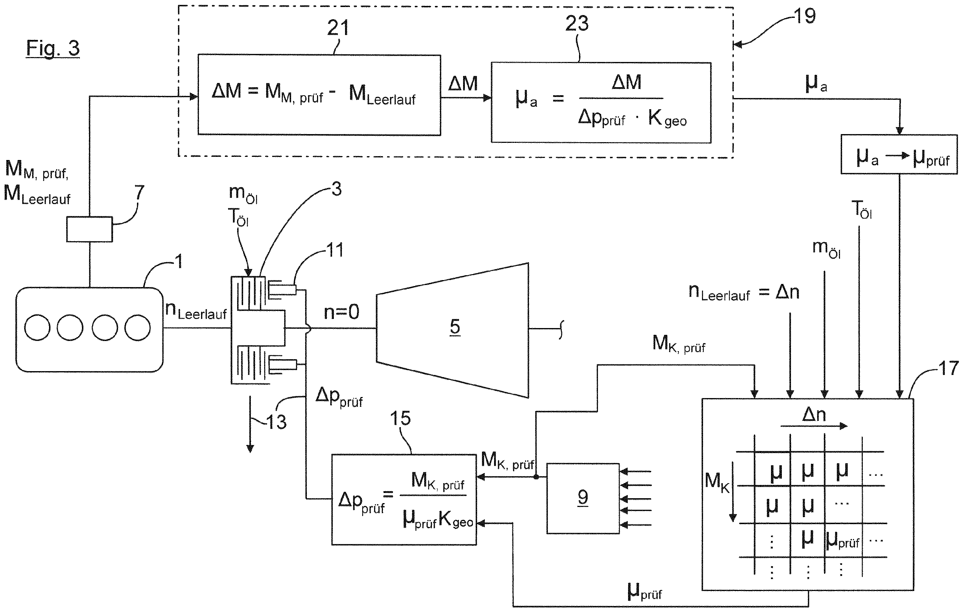

In der Fig. 1 ist grob vereinfacht ein Antriebsstrang eines Kraftfahrzeugs gezeigt, bei dem eine Brennkraftmaschine 1 unter Zwischenschaltung eines Anfahrelements 3 auf ein Fahrzeug-Getriebe 5 abtreibbar ist. Die Brennkraftmaschine 1 ist über ein Motorsteuergerät 7 ansteuerbar, das im Fahrbetrieb eine Ist-Motordrehzahl sowie ein Ist-Motormoment ermittelt und im Fahrzeugstillstand die Ist-Motordrehzahl auf eine vordefinierte Leerlaufdrehzahl $n_{Leerlauf}$ drehzahlregelt (Fig. 3). Das Anfahrelement 3 ist in der Fig. 1 eine nasslaufende Lamellenkupplung, die über ein Kupplungs-Steuergerät 9 elektrohydraulisch ansteuerbar ist. Hierzu weist die Lamellenkupplung 3 als Kupplungsaktor 11 einen Ringkolben auf, der über ein Hydrauliksystem 13 und einer Stelleinheit 15 mit dem Kupplungs-Steuergerät 9 in Signalverbindung ist.

Im Fahrbetrieb berechnet das Kupplungs-Steuergerät 9 in Abhängigkeit von aktuellen Fahrbetriebsparametern ein Soll-Kupplungsmoment $M_{K,soll}$, das in der Stelleinheit 15 in einen damit korrelierenden Stelldruck $\Delta p$ umgewandelt wird. Der Stelldruck $\Delta p$ wirkt auf den Kupplungsaktor 11 ein, um in der Lamellenkupplung 3 ein Ist-Kupplungsmoment $M_{K,ist}$ einzustellen, das mit dem vom Kupplungs-Steuergerät 9 berechneten Soll-Kupplungsmoment $M_{K,soll}$ übereinstimmt.

Die Stellgröße $\Delta p$ wird in der Stelleinheit 15 in Abhängigkeit vom Soll-Kupplungsmoment $M_{K,soll}$ und in Abhängigkeit von einem im Kupplungs-Steuergerät 9 hinterlegten Reibwert $\mu$ ermittelt, und zwar mittels der folgenden Gleichung:

$$\Delta p = \frac{M_{K,soll}}{\mu \times K_{geo}},$$

wobei

$M_{K,soll}$     Soll-Kupplungsmoment

$\mu$     Reibwert

$K_{geo}$     Konstante.

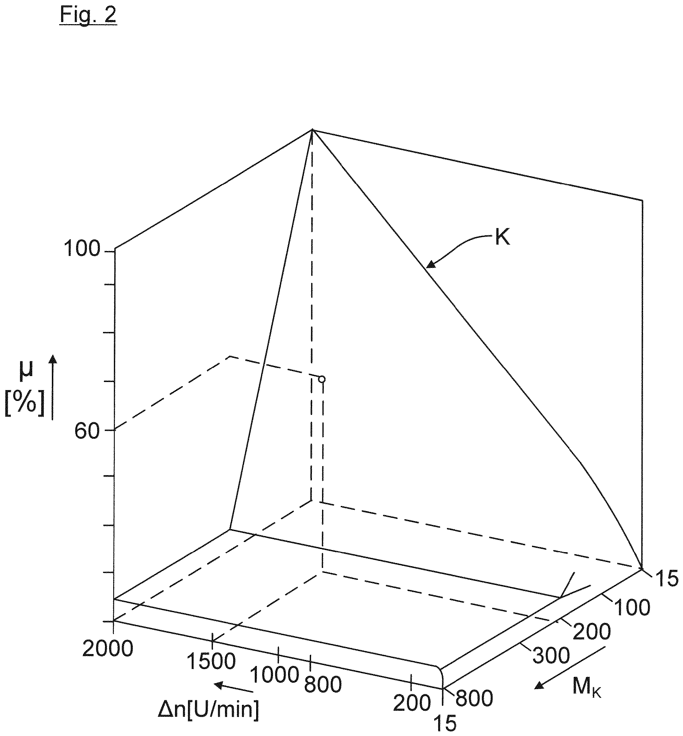

In der Fig. 1 ist die Stelleinheit 15 in Signalverbindung mit einer Datenbank 17. In der Datenbank 17 sind Reibwerte $\mu$ in einer Mehrzahl von Reibwert-Kennfeldern hinterlegt, von denen in der Fig. 1 nur eines gezeigt ist. Beispielhaft ist in der Fig. 2 ein solches Reibwert-Kennfeld K als eine geschlossene Hüllfläche in einem mehrachsigen Kennfeld-Diagramm aufgespannt. In dem Kennfeld-Diagramm der Fig. 2 sind in Abhängigkeit von einem Kupplungsschlupf $\Delta n$ und einem Kupplungsmoment $M_K$ jeweils zugeordnete Reibwerte $\mu$ ermittelbar. Das in der Fig. 2 gezeigte Reibwert-Kennfeld gilt für eine vordefinierte Kühlöl-Temperatur sowie einem vordefinierten Kühlöl-Volumenstrom $m_{Öl}$. In der Datenbank 17 sind eine Mehrzahl solcher Reibwert-Kennfelder in Abhängigkeit unterschiedlicher Kühlöl-Temperaturen $T_{öl}$ und Kühlöl-Volumenströme hinterlegt.

Das in der Fig. 2 dargestellte Kennfeld K wurde werksseitig eingestellt und beruht zum Beispiel auf empirischer Ermittlung. Beispielhaft wird in der Datenbank 17 bei einem Kupplungschlupf $\Delta n$ von 1500 U/min und bei einem Soll-Kupplungsmoment von 200 Nm in der Fig. 2 ein Reibwert $\mu$ bestimmt, der in etwa bei 60% liegt. Dieser Reibwert $\mu$ wird in der Fig. 1 in die Stelleinheit 15 ausgelesen, um die mit dem Soll-Kupplungsmoment $M_{K,soll}$ korrelierende Stellgröße $\Delta p$ zu errechnen.

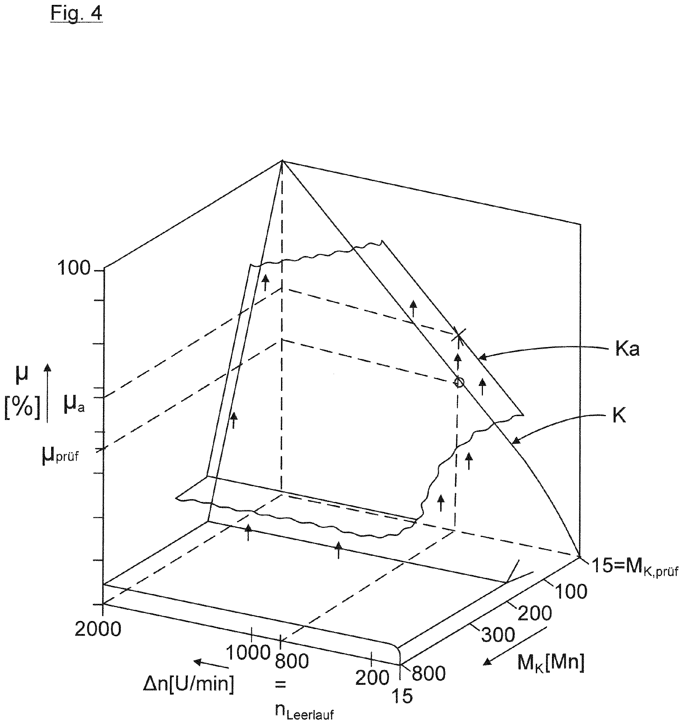

Nachfolgend wird anhand der Fig. 3 und 4 ein Adaptionsvorgang beschrieben, mit dem das in der Fig. 2 gezeigte Kennfeld K einem aktuellen Momentenübertragungsverhalten der Lamellenkupplung 3 angepasst werden kann: Zur Durchführung des Adaptionsvorgangs ist in der Fig. 3 dem Kupplungs-Steuergerät 9 eine Adaptionseinrichtung 19 zugeordnet. Diese startet bei Vorliegen eines Fahrzeugstillstands mit im Leerlauf betriebener Brennkraftmaschine 1 den Reibwert-Adaptionsvorgang. Bei dem Reibwert-Adaptionsvorgang wird im Kupplungs-Steuergerät 9 ein Prüf-Kupplungsmoment $M_{K,prüf}$ (das heißt in der Fig. 4 ein Kriechmoment von 15 Nm) generiert. In dem Kennfeld-Diagramm der Fig. 4 wird in Abhängigkeit von dem Prüf-Kupplungsmoment $M_{K,prüf}$ und dem aktuellen Schlupf $\Delta n$ (das heißt die Leerlaufdrehzahl) ein Prüf-Reibwert $\mu_{prüf}$ bestimmt und an die Stelleinheit 15 ausgelesen. Die Stellgröße 15 berechnet daraus eine Prüf-Stellgröße $\Delta p_{prüf}$, mit der der Kupplungsaktor 11 angesteuert wird.

Aufgrund der Ansteuerung des Kupplungsaktors 11 mit der Prüf-Stellgröße $\Delta p_{prüf}$ erfolgt in der Fig. 3 eine Erhöhung des Ist-Motormoments auf ein Prüf-Motormoment $M_{M,prüf}$, jedoch unter Beibehaltung der auf die Leerlaufdrehzahl $n_{Leerlauf}$ geregelten Ist-Motordrehzahl. In einem Subtrahierglied 21 der Adaptionseinrichtung 19 wird eine Momentendifferenz $\Delta M$ aus dem Prüf-Motormoment $M_{M,prüf}$ und dem Leerlauf-Motormoment $M_{Leerlauf}$ ermittelt, das sich im Fahrzeugstillstand bei vollständig geöffneter Lamellenkupplung 3 ergibt.

Die im Subtrahierglied 21 ermittelte Momentendifferenz $\Delta M$ entspricht einem Ist-Kupplungsmoment der Lamellenkupplung 3, das sich durch die Ansteuerung mit der Prüf-Stellgröße $\Delta p_{prüf}$ einstellt und mit dem Soll-Kupplungsmoment $M_{K,soll}$ übereinstimmt. Mittels der Momentendifferenz $\Delta M$ wird in einer Auswerteeinheit 23 ein adaptierter Reibwerts $\mu_a$ berechnet, und zwar mittels der folgenden Gleichung:

$$\mu_a = \frac{\Delta M}{\Delta p_{prüf} \times K_{geo}},$$

wobei

$\Delta M$ Momentendifferenz zwischen Prüf-Motormoment $M_{M,prüf}$ und Leerlauf-Motormoment $M_{Leerlauf}$;
$\Delta p_{prüf}$ Prüf-Stellgröße, die mit dem Prüf-Kupplungsmoment $M_{K,prüf}$ korreliert;

Der in der Auswerteeinheit 23 berechnete adaptierte Reibwert $\mu_a$ wird zur Datenbank 17 übermittelt und wird dort anstelle des Prüf-Reibwerts $\mu_{prüf}$ in der Datenbank 17 hinterlegt.

Der oben dargelegte Adaptionsvorgang wird während des Fahrbetriebs automatisch durchgeführt, sofern eine Detektionseinheit der Adaptionseinrichtung 19 einen Fahrzeugstillstand erfasst, bei dem die Brennkraftmaschine 1 im Leerlauf betrieben wird, zum Beispiel bei einem Fahrzeugstillstand an einer Ampel, bei der im Fahrzeugstillstand die Lamellenkupplung 3 mit einem Kriechmoment beaufschlagt wird, um ein verzögerungsfreies Anfahren nach dem Lösen der Fahrzeugbremse zu ermöglichen, wobei das Kriechmoment dem beim Adaptionsvorgang verwendeten Prüf-Sollmoment $M_{K,prüf}$ entspricht.

Wie aus der Fig. 3 hervorgeht, ersetzt der im Adaptionsvorgang in der Auswerteeinheit 23 berechnete adaptierte Reibwert $\mu_a$ den dazu korrespondierenden Prüf-Reibwert $\mu_{prüf}$ im Start-Kennfeld K (Fig. 4). Die restlichen Reibwerte im Start-Kennfeld K werden, insbesondere durch Interpolation, dem berechneten adaptierten Reibwert $\mu_a$ angepasst, wodurch sich ein adaptiertes Kennfeld $K_a$ (in der Fig. 4 teilweise angedeutet) ergibt. In einer rechenzeitreduzierten Variante kann das adaptierte Kennfeld $K_a$ unter Parallelverschiebung des Start-Kennfelds K entlang einer Reibwert-Achse im Kennfeld-Diagramm bis zum berechneten adaptierten Reibwert $\mu_a$ verschoben werden, wie es in der Fig. 4 angedeutet ist.

**Patentansprüche**

1. Fahrzeug, in dessen Antriebsstrang eine Kupplung, insbesondere eine nasslaufende Lamellenkupplung (3), als Anfahrelement zwischen einer Brennkraftmaschine (1) und einem Getriebe (5) geschaltet ist, mit einem Kupplungs-Steuergerät (9), das in Abhängigkeit von aktuellen Fahrbetriebsparametern ein Soll-Kupplungsmoment ($M_{K,soll}$) ermittelt und einen Kupplungsaktor (11) mit einer, mit dem Soll-Kupplungsmoment ($M_{K,soll}$) korrelierenden Stellgröße ($\Delta p$) ansteuert, um an der Kupplung (3) ein Ist-Kupplungsmoment ($M_{K,ist}$) einzustellen, wobei die Stellgröße ($\Delta p$) in Abhängigkeit vom Soll-Kupplungsmoment ($M_{K,soll}$) und von einem im Kupplungs-Steuergerät (9) hinterlegten Reibwert ($\mu$) in einer Stelleinheit (15) des Kupplungs-Steuergeräts (9) ermittelt wird, und einem Motor-Steuergerät (7), das eine Ist-Motordrehzahl und ein Ist-Motormoment ermittelt und in einem Fahrzeugstillstand bei laufender Brennkraftmaschine (1) die Ist-Motordrehzahl auf eine vordefinierte Leerlaufdrehzahl ($n_{Leerlauf}$) drehzahlregelt, **dadurch gekennzeichnet, dass** dem Kupplungs-Steuergerät (9) eine Adaptionseinrichtung (19) zugeordnet ist, die bei Vorliegen eines Fahrzeugstillstands mit im Leerlauf betriebener Brennkraftmaschine (1) einen Reibwert-Adaptionsvorgang startet, bei dem der Kupplungsaktor (11) in Abhängigkeit von einem Prüf-Kupplungsmoment ($M_{K,prüf}$) und einem Prüf-Reibwert ($\mu_{prüf}$) mit einer Prüf-Stellgröße ($\Delta p_{prüf}$) beaufschlagt wird, und zwar unter Erhöhung des Ist-Motormoments auf ein Prüf-Motormoment ($M_{M,prüf}$) und unter Beibehaltung der auf die Leerlaufdrehzahl ($n_{Leerlauf}$) geregelten Ist-Motordrehzahl, und dass die Adaptionseinrichtung (19) eine Auswerteeinheit (23) aufweist, die aus dem Prüf-Motormoment ($M_{M,prüf}$), der Prüf-Stellgröße ($\Delta p_{prüf}$) und einem Leerlauf-Motormoment ($M_{Leerlauf}$), das sich im Fahrzeugstillstand bei vollständig geöffneter Kupplung (3) ergibt, einen adaptierten Reibwert ($\mu_a$) ermittelt, der anstelle des Prüf-Reibwerts ($p_{prüf}$) im Kupplungs-Steuergerät (9) hinterlegbar ist.

2. Fahrzeug nach Anspruch 1, **dadurch gekennzeichnet, dass** die auf den Kupplungsaktor (11) wirkende Stellgröße ($\Delta p$) aus der folgenden Gleichung berechnet wird:

$$\Delta p = \frac{M_{K,soll}}{\mu \times K_{geo}} \quad ,$$

wobei

$M_{K,soll}$ Soll-Kupplungsmoment
$\mu$ Reibwert
$K_{geo}$ Konstante.

3. Fahrzeug nach Anspruch 1 oder 2, **dadurch gekennzeichnet, dass** im Adaptionsvorgang eine Momentendifferenz ($\Delta M$) zwischen dem Prüf-Motormoment ($M_{M,prüf}$) und dem Leerlauf-Motormoment ($M_{Leerlauf}$) dem an der Kupplung (3) anliegenden Ist-Kupplungsmoment ($M_{K, ist}$) entspricht, das mit dem, vom Kupplung-Steuergerät (9) ausgegebenen Prüf-Kupplungsmoment ($M_{K,prüf}$) korreliert.

4. Fahrzeug nach Anspruch 3, **dadurch gekennzeichnet, dass** in der Auswerteeinheit (23) der Adaptionseinrichtung (19) der adaptierte Reibwert ($\mu_a$) aus der folgenden Gleichung berechnet wird:

$$\mu_a = \frac{\Delta M}{\Delta p_{prüf} \times K_{geo}} \quad ,$$

wobei

$\Delta M$ Momentendifferenz zwischen Prüf-Motormoment $M_{M,prüf}$ und Leerlauf-Motormoment $M_{Leerlauf}$;
$\Delta p_{prüf}$ Prüf-Stellgröße, korreliert mit Prüf-Kupplungsmoment $M_{K,prüf}$
$K_{geo}$ Konstante.

5. Fahrzeug nach einem der Ansprüche 1 bis 4, **dadurch gekennzeichnet, dass** der Adaptionsvorgang während eines Fahrbetriebs automatisch durchgeführt wird, sofern eine Detektionseinheit der Adaptionseinrichtung (19) den Fahrzeugstillstand mit im Leerlauf betriebener Brennkraftmaschine (1) erfasst, zum Beispiel ein Fahrzeugstillstand an einer Ampel, bei der die Kupplung (3) mit einem Kriechmoment beaufschlagt ist, um nach einem Lösen einer Fahrzeugbremse ein verzögerungsfreies Anfahren zu ermöglichen, wobei das Kriechmoment dem beim Adaptionsvorgang verwendeten Prüf-Kupplungsmoment ($M_{K,prüf}$) entspricht.

6. Fahrzeug nach einem der vorhergehenden Ansprüche, **dadurch gekennzeichnet, dass** im Adaptionsvorgang der in die Stelleinheit (15) ausgelesene Prüf-Reibwert ($\mu_{prüf}$) zusammen mit einer Vielzahl weiterer Prüf-Reibwerte zumindest ein tabellarisch hinterlegtes Start-Kennfeld (K) bilden, das in einem mehrachsigen Kennfeld-Diagramm aufspannbar ist und in dem die Reibwerte ($\mu$), insbesondere empirisch, in Abhängigkeit von einem Kupplungsschlupf ($\Delta n$) und von einem Kupplungsmoment ($M_K$) abgelegt sind, und dass insbesondere eine Mehrzahl solcher Kennfelder (K) in Abhängigkeit unterschiedlicher Kühlöl-Temperaturen ($T_{Öl}$) und/oder -Volumenströme ($m_{Öl}$) hinterlegt sind.

7. Fahrzeug nach Anspruch 6, **dadurch gekennzeichnet, dass** im Adaptionsvorgang der in der Auswerteeinheit (23) berechnete adaptierte Reibwert ($\mu_a$) den dazu korrespondierenden Prüf-Reibwert ($\mu_{prüf}$) im Start-Kennfeld (K) ersetzt, und dass die restlichen Reibwerte ($\mu$) im Start-Kennfeld (K), insbesondere durch Interpolation oder durch Abschätzung, dem berechneten adaptierten Reibwert ($\mu_a$) anpassbar sind, und zwar unter Bildung eines adaptierten Kennfelds ($K_a$).

8. Fahrzeug nach Anspruch 7, **dadurch gekennzeichnet, dass** das adaptierte Kennfeld ($K_a$) unter Parallelverschiebung des Start-Kennfelds (K) entlang einer Reibwert-Achse bis zum berechneten adaptierten Reibwert ($\mu_a$) im Kennfeld-Diagramm gebildet wird.

9. Fahrzeug nach einem der vorhergehenden Ansprüche 5 bis 8, **dadurch gekennzeichnet, dass** in jedem Adaptionsvorgang zusätzlich die aktuelle Öltemperatur ($T_{Öl}$) und der aktuelle Öl-Volumenstrom ($m_{Öl}$) erfasst wird, und dass der berechnete adaptierte Reibwert ($\mu_a$) in Abhängigkeit davon in einem der im Kupplungs-Steuergerät (9) hinterlegten Kennfelder den korrespondierenden Prüf-Reibwert ($\mu_{prüf}$) ersetzt.

**Claims**

1. Vehicle, in the drive train of which a clutch, in particular wet-running multi-disc clutch (3), is connected as a starter element between an internal combustion engine (1) and a transmission (5), having a clutch control device (9), which in dependence on current driving operating parameters determines a desired clutch torque ($M_{K, soll}$) and controls a clutch actuator (11) with a manipulated variable ($\Delta p$) which correlates with the desired clutch torque ($M_{K, soll}$), in order to set an actual clutch torque ($M_{K, ist}$) on the clutch (3), wherein the manipulated variable ($\Delta p$) is determined in dependence on the desired clutch torque ($M_{K, soll}$) and on a friction value ($\mu$), which is deposited in the clutch control device (9), in an actuating unit (15) of the clutch control device (9), and an engine control device (7), which determines an actual engine speed and an actual engine torque and speed-regulates the actual motor speed to a predefined idle speed ($n_{Leerlauf}$) in a vehicle standstill when the internal combustion engine (1) is running, **characterised in that** an adaptation device (19) is assigned to the clutch control device (9), which, if the vehicle is at a standstill with the internal combustion engine (1) operated at idle, starts a friction value adaptation process, in which the clutch actuator (11) is subjected to a test manipulated variable ($\Delta p_{prüf}$) in dependence on a test clutch torque ($M_{K, prüf}$) and a test friction value ($\mu_{prüf}$), specifically by increasing the actual engine torque to a test engine torque ($M_{M,prüf}$) and by maintaining the actual engine speed regulated to the idle speed ($n_{Leerlauf}$) and that the adaptation device (19) has an evaluation unit (23) which from the test engine torque ($M_{M, prüf}$), test manipulated variable ($\Delta p_{prüf}$) and an idle engine torque ($M_{Leerlauf}$), which results in the standstill of the vehicle when the clutch (3) is fully open, determines an adapted friction value ($\mu_a$), which can be deposited in the clutch control device (9) instead of the test friction value ($\mu_{prüf}$).

2. Vehicle according to claim 1, **characterised in that** the manipulated variable ($\Delta p$) acting on the clutch actuator (11) is calculated from the following equation:

$$(\Delta p) = \frac{MK,soll}{\mu \ x \ Kgeo} \ ,$$

wherein

$M_{K,soll}$ desired clutch torque
$\mu$ friction value
$K_{geo}$ constant.

3. Vehicle according to clam 1 or 2, **characterised in that** in the adaptation process a torque difference ($\Delta M$) between the test engine torque ($M_{M, prüf}$) and the idle engine torque ($M_{Leerlauf}$) corresponds to the actual clutch torque ($M_{K, ist}$) applied to the clutch (3), which correlates with the test clutch torque ($M_{K, prüf}$) output by the clutch control device (9).

4. Vehicle according to claim 3, **characterised in that** in the evaluation unit (23) of the adaptation device (19) the adapted friction value ($\mu_a$) is calculated from the following equation:

$$\mu_a = \frac{\Delta M}{\Delta p prüf \ x \ Kgeo} \ ,$$

wherein

$\Delta M$ torque difference between test engine torque $M_{M, prüf}$ and idle engine torque $M_{Leerlauf}$;
$\Delta p_{prüf}$ test manipulated variable, correlates with test clutch torque ($M_{K, prüf}$)
$K_{geo}$ constant.

5. Vehicle according to any one of claims 1 to 4, **characterised in that** the adaptation process is carried out automatically during a driving operation, provided that a detection unit of the adaptation device (19) detects the vehicle standstill with the internal combustion engine (1) operated at idle, for example, a vehicle stillstand at a traffic light, in which the clutch (3) is subjected to a creeping torque, in order to make possible a start-up without any delay after a release of a vehicle brake, wherein the creeping torque corresponds to the test clutch torque ($M_{K, prüf}$) used in the adaptation process.

6. Vehicle according to any one of the preceding claims, **characterised in that** in the adaptation process the test friction value ($\mu_{prüf}$) read-out into the actuating unit (15) together with a plurality of further test friction values form at least one start characteristic field (K) deposited in tabular form, which can be spanned in a multi-axis characteristic diagram and in which the friction values ($\mu$), are, in particular, empirically stored in dependence on a clutch slip ($\Delta n$) and on a clutch torque ($M_K$), and that in particular a plurality of such characteristic fields (K) are deposited in dependence on different cooling oil temperatures ($T_{Öl}$) and/or -volume flows ($m_{Öl}$).

7. Vehicle according to claim 6, **characterised in that** in the adaptation process the adapted friction value ($\mu_a$) calculated in the evaluation unit (23) replaces the test friction value ($\mu_{prüf}$) corresponding thereto in the start characteristic field (K), and that the remaining friction values ($\mu$) in the start characteristic field (K) can be adapted, in particular, by interpolation or by estimation to the calculated adapted friction value ($\mu_a$), specifically by forming an adapted characteristic field ($K_a$).

8. Vehicle according to claim 7, **characterised in that** the adapted characteristic field ($K_a$) is formed in the characteristic diagram by parallel displacement of the start characteristic field (K) along a friction value axis up to the calculated adapted friction value ($\mu_a$).

9. Vehicle according to any one of the preceding claims 5 to 8, **characterised in that** in each adaptation process the current oil temperature ($T_{Öl}$) and the current oil volume flow ($m_{Öl}$) are in addition detected, and that the calculated adapted friction value ($\mu_a$) replaces the corresponding test friction value ($\mu_{prüf}$) in dependence thereon in a characteristic field deposited in the clutch control device (9).

**Revendications**

1. Véhicule, dans la chaîne cinématique duquel un embrayage, en particulier un embrayage multidisque humide (3), est commuté en tant qu'élément de démarrage entre un moteur à combustion interne (1) et une transmission (5), avec un appareil de commande d'embrayage (9), qui détermine en fonction de paramètres de fonctionnement actuels un couple d'embrayage de consigne ($M_{K,soll}$) et pilote un actionneur d'embrayage (11) avec une grandeur de réglage ($\Delta\rho$) en corrélation avec le couple d'embrayage de consigne ($M_{K,soll}$) pour régler un couple d'embrayage réel ($M_{K,ist}$) au niveau de l'embrayage (3), dans lequel la grandeur de réglage ($\Delta\rho$) est déterminée en fonction du couple d'embrayage de consigne ($M_{K,soll}$) et d'un coefficient de friction ($\mu$) déposé dans l'appareil de commande d'embrayage (9) dans une unité de réglage (15) de l'appareil de commande d'embrayage (9), et d'un appareil de commande de moteur (7), qui détermine une vitesse du moteur réelle et un couple de moteur réel et régule en vitesse la vitesse du moteur réelle à une vitesse de ralenti ($n_{Leerlauf}$) prédéfinie dans un arrêt de véhicule lorsque le moteur à combustion interne (1) fonctionne, **caractérisé en ce qu'**un dispositif d'adaptation (19) est associé à l'appareil de commande d'embrayage (9), qui démarre en présence d'un arrêt de véhicule avec moteur à combustion interne (1) fonctionnant au ralenti une opération d'adaptation du coefficient de friction, dans laquelle l'actionneur d'embrayage (11) est sollicité en fonction d'un couple d'embrayage de contrôle ($M_{K,prüf}$) et d'un coefficient de friction de contrôle ($\mu_{prüf}$) avec une grandeur de réglage de contrôle ($\Delta\rho_{prüf}$), et ce par augmentation du couple de moteur réel à un couple de moteur de contrôle ($M_{M,prüf}$) et par maintien de la vitesse de moteur réelle régulée sur la vitesse de ralenti ($n_{Leerlauf}$), et que le dispositif d'adaptation (19) présente une unité d'évaluation (23), qui détermine à partir du couple de moteur de contrôle ($M_{M,prüf}$), de la grandeur de réglage de contrôle ($\Delta\rho_{prüf}$) et d'un couple de moteur de ralenti ($M_{Leerlauf}$), qui résulte à l'arrêt du véhicule lorsque l'embrayage (3) est entièrement ouvert, un coefficient de friction adapté ($\mu_a$) qui peut être déposé à la place du coefficient de friction de contrôle ($\mu_{prüf}$) dans l'appareil de commande d'embrayage (9).

2. Véhicule selon la revendication 1, **caractérisé en ce que** la grandeur de réglage ($\Delta\rho$) agissant sur l'actionneur d'embrayage (11) est calculée à partir de l'équation suivante :

$$\Delta\rho = \frac{MK,soll}{\mu \times Kgeo},$$

dans lequel

$M_{K,soll}$ couple d'embrayage de consigne
$\mu$ coefficient de friction
$K_{geo}$ constante.

3. Véhicule selon la revendication 1 ou 2, **caractérisé en ce que** dans l'opération d'adaptation, une différence de couple ($\Delta M$) entre le couple de moteur de contrôle ($M_{M,prüf}$) et le couple de moteur de ralenti ($M_{Leerlauf}$) correspond au couple d'embrayage réel ($M_{K,ist}$) appliqué à l'embrayage (3), qui est corrélé avec le couple d'embrayage de contrôle ($M_{K,prüf}$) émis par l'appareil de commande d'embrayage (9).

4. Véhicule selon la revendication 3, **caractérisé en ce que** dans l'unité d'évaluation (23) du dispositif d'adaptation (19), le coefficient de friction adapté ($\mu_a$) est calculé à partir de l'équation suivante :

$$\mu_a = \frac{\Delta M}{\Delta\rho prüf \times Kgeo},$$

dans lequel

$\Delta M$ différence de couple entre le couple de moteur de contrôle $M_{M,prüf}$ et le couple de moteur de ralenti $M_{Leerlauf}$ ;
$\Delta\rho_{prüf}$ grandeur de réglage de contrôle, corrélée avec le couple d'embrayage de contrôle $M_{K,prüf}$
$K_{geo}$ constante.

5. Véhicule selon l'une quelconque des revendications 1 à 4, **caractérisé en ce que** l'opération d'adaptation est réalisée automatiquement pendant un fonctionnement, si une unité de détection du dispositif d'adaptation (19) détecte l'arrêt du véhicule avec moteur à combustion interne (1) fonctionnant au ralenti, par exemple un arrêt du véhicule à un feu, dans lequel l'embrayage (3) est sollicité avec un couple de vitesse lente pour permettre après un desserrage d'un frein de véhicule un démarrage sans délai, dans lequel le couple de vitesse lente correspond au couple d'embrayage de contrôle ($M_{K,prüf}$) utilisé lors de l'opération d'adaptation.

6. Véhicule selon l'une quelconque des revendications précédentes, **caractérisé en ce que** dans l'opération d'adaptation, le coefficient de friction de contrôle ($\mu_{prüf}$) lu dans l'unité de réglage (15) forme conjointement avec une pluralité d'autres coefficients de friction de contrôle au moins un champ caractéristique de démarrage (K) déposé sous forme de tableau, qui peut être établi dans un diagramme de champ caractéristique multiaxial et dans lequel les coefficient de friction ($\mu$) sont déposés, en particulier de manière empirique, en fonction d'un glissement d'embrayage ($\Delta$n) et d'un couple d'embrayage ($M_K$), et qu'en particulier une pluralité de tels champs caractéristiques (K) est déposée en fonction de différentes températures d'huile de refroidissement ($T_{\text{Öl}}$) et/ou débits volumiques d'huile de refroidissement ($m_{\text{Öl}}$).

7. Véhicule selon la revendication 6, **caractérisé en ce que** dans l'opération d'adaptation, le coefficient de friction adapté ($\mu_a$) calculé dans l'unité d'évaluation (23) remplace le coefficient de friction de contrôle ($\mu_{\text{prüf}}$) correspondant à celui-ci dans le champ caractéristique de démarrage (K), et que les coefficients de friction restants ($\mu$) dans le champ caractéristique de démarrage (K) peuvent être adaptés, en particulier par interpolation ou par estimation, au coefficient de friction adapté ($\mu_a$) calculé, et ce par formation d'un champ caractéristique adapté ($K_a$).

8. Véhicule selon la revendication 7, **caractérisé en ce que** le champ caractéristique adapté ($K_a$) est formé par déplacement parallèle du champ caractéristique de démarrage (K) le long d'un axe de coefficient de friction jusqu'au coefficient de friction adapté ($\mu_a$) calculé dans le diagramme de champ caractéristique.

9. Véhicule selon l'une quelconque des revendications précédentes 5 à 8, **caractérisé en ce que** dans chaque opération d'adaptation, la température d'huile ($T_{\text{Öl}}$) actuelle et le débit volumique d'huile ($m_{\text{Öl}}$) actuel est détecté en plus, et que le coefficient de friction adapté ($\mu_a$) calculé remplace en fonction de cela dans un des champs caractéristiques déposés dans l'appareil de commande d'embrayage (9) le coefficient de friction de contrôle ($\mu_{\text{prüf}}$) correspondant.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004029558 A1
- DE 2008027071 A1
- DE 19751455 A1
- DE 19846404 A1
- WO 2016008463 A1
- DE 102011080716 A1
- WO 03006841 A2
- DE 10201982 A1